# EUROPÄISCHE PATENTSCHRIFT

(11) **EP 3 206 859 B1**
(45) Veröffentlichungstag und Bekanntmachung des Hinweises auf die Patenterteilung: **26.09.2018**
(21) Anmeldenummer: 15790444.2
(22) Anmeldetag: 12.10.2015
(51) Int. Cl.: B29C 64/153, B29C 64/165, B29C 64/205, B29C 64/20, B33Y 10/00, B33Y 30/00

(54) **VERFAHREN UND VORRICHTUNG ZUR HERSTELLUNG VON BAUTEILEN IN EINEM SCHICHTBAUVERFAHREN**
METHOD AND DEVICE FOR PRODUCING COMPONENTS IN A LAYER PRODUCTION PROCESS
PROCÉDÉ ET DISPOSITIF DE FABRICATION DE COMPOSANTS SELON UN PROCESSUS DE FABRICATION EN COUCHES

(30) Priorität: 13.10.2014 DE 102014014895
(43) Veröffentlichungstag der Anmeldung: 23.08.2017
(73) Patentinhaber: Voxeljet AG, 86316 Friedberg (DE)
(72) Erfinder: HARTMANN, Andreas, 86391 Stadtbergen (DE)
(74) Vertreter: Helbig, Christian
(86) Internationale Anmeldenummer: PCT/DE2015/000499
(87) Internationale Veröffentlichungsnummer: WO 2016/058577

(56) Entgegenhaltungen:
- WO-A1-2013/174361
- DE-A1-102012 022 859

## Beschreibung

Die vorliegende Erfindung betrifft ein Verfahren zum Herstellen von dreidimensionalen Bauteilen aus einzelnen Schichten, bei dem wiederholt dünne Schichten aus formlosen Baumaterial, wie z.B. Partikelmaterial oder streichfesten Pasten aufgetragen werden und anschließend selektiv zu einem Bauteilquerschnitt verfestigt werden.

Weiterhin betrifft die Erfindung eine Vorrichtung zum Herstellen von dreidimensionalen Bauteilen.

Im Herstellungsverfahren 3D-Druck wird zum Beispiel auf einer absenkbaren Bauplattform zunächst eine dünne Schicht aus Partikelmaterial aufgetragen. Anschließend bedruckt eine Art von Tintenstrahldruckkopf diese selektiv mit einem flüssigen Binder. Der Binder verklebt gezielt die lose aufgetragenen Partikel zu einem Bauteilquerschnitt.

Im Herstellungsverfahren Strahlschmelzen kann das Material dagegen durch energiereiche Strahlung verfestigt werden. Bei konventionellen Produktionsanlagen werden die Bauteile schichtweise vertikal von oben nach unten hergestellt. Die Patentanmeldung WO 2011 127 897 A2 beschreibt dagegen ein Verfahren, bei dem einzelne Schichten aus Partikelmaterial in einem Winkel, der kleiner als der spezifische Schüttwinkel des Partikelmaterials ist, auf einer schichtweise, horizontal bewegten Schüttung aufgebracht wird. So wird es möglich, der Produktionsanlage an der Rückseite Bauteile zu entnehmen, ohne den Bauprozess unterbrechen zu müssen. Gleichzeitig wird es in diesem Verfahren theoretisch möglich, Bauteile unbegrenzter Länge herzustellen.

Problemstellung dieses Verfahrens ist, dass für die Schüttung ein kleiner Winkel gewählt werden muss, was zu großen Maschinenabmessungen führt. Je höher ein Bauteil werden soll desto länger muss die Anlage ausgeführt sein.

Ein weiteres Problem liegt in den Linearantrieben für den Baufeldbeschichter der die Schichten aus Partikelmaterial auf die Schüttung aufträgt. Die Linearführung ist aufwendig, empfindlich gegen Verschmutzung und schwer abzudichten.

Produktionsanlagen, wie sie in WO 2014 079 404 A1 beschrieben werden, sind an der Rückseite weitgehend offen aufgebaut. Aus diesem Grund sind die Prozessräume dieser Produktionsanlagen, in denen die Schichten aufgetragen und anschließend selektiv verfestigt werden, gegenüber der Umgebung nicht abgedichtet. Diese Produktionsanlagen sind deshalb für viele Verfahren die z.B. mit Schutzgasen arbeiten oder thermisch isoliert sein müssen nicht nutzbar.

Da sich für die oben beschrieben Produktionsanlagen konventionelle Förderbänder mit Umlenkrollen und Antriebsrollen als wenig geeignet erwiesen haben, werden in der Patentanmeldung WO 2013 174 361 A1 komplexe Transportvorrichtungen vorgestellt. Die hier vorgeschlagenen Lösungen erfordern bei großen Produktionsanlagen eine große Fertigungsgenauigkeit und enormen Materialaufwand. Bei Produktionsanlagen für kleinere Bauteile sind die beschrieben Lösungen aus Patentanmeldung WO 2013 174 361 A1 im Verhältnis zu aufwendig, kostenintensiv und teilweise nur begrenzt funktionsfähig.

Weiterhin ist es aus Sicherheitserwägungen sowie zur Herstellung oder Beibehaltung einer einheitlichen und bestimmten Temperatur oder sonstiger von der Umgebung sich unterscheidenden Atmosphärenbedingungen im Bauraum der 3D-Druckvorrichtung wünschenswert diesen Bauraum möglichst abgeschlossen bereit zu stellen. Dies stellt insbesondere bei kontinuierlichen 3D-Druckverfahren und entsprechenden Vorrichtungen ein Problem dar, da sich beim Ausfahren, insbesondere beim kontinuierlichen Ausfahren der Bauteile bzw. des Schüttgutes, der Ausgangstunnel bisher nicht befriedigend abdichten bzw. abschließen ließ.

Der Erfindung liegt demgemäß als eine Aufgabe zugrunde ein Verfahren und eine Vorrichtung bereitzustellen, die auch im kontinuierlichen Verfahren einen im wesentlichen geschlossenen Bauraum zur Verfügung zu stellen oder zumindest die Nachteile des Standes der Technik zu vermindern oder zu überwinden.

Diese Aufgabe wird gelöst durch ein Verfahren und eine Vorrichtung nach den Aspekte 1 und 6.

Die Erfindung sowie bevorzugte Ausführungsformen werden im Folgenden beschrieben.

Die Erfindung betrifft in einem Aspekt eine Vorrichtung zum Herstellen von dreidimensionalen Bauteilen, umfassend einen Baufeldbeschichter in einem Prozessraum, wobei formloses Baumaterial, wie z.B. Partikelmaterial oder streichfeste Pasten, schichtweise in einer ersten Aufnahmeebene auf eine Baumaterialschüttung auftragbar ist und ferner eine Verfestigungseinrichtung im Prozessraum vorgesehen ist, um das Baumaterial selektiv zu verfestigen, dadurch gekennzeichnet, dass ein Beschichter zum Auftragen von Baumaterial in einer weiteren Aufnahmeebene bis zu einer Unterkannte eines Deckels vorgesehen ist, ferner ein Förderband und Seitenwände vorgesehen sind und der Deckel mit Seitenwänden und dem Förderband für die Materialschüttung einen dichten Eintrittstunnel in ein Gehäuse bildet, so dass das Gehäuse und die sich bewegende Schüttung den Prozessraum gegenüber der Umgebung im wesentlichen abdichtet, vorzugsweise während die Schüttung diesen Tunnel durchläuft.

Unter einer Aufnahmeebene ist hierbei zu die ebene zu verstehen, auf die Baumaterial aufgetragen wird. Dies muss dabei nicht zwingend eine gerade Fläche sein, sondern kann ebenso eine Krümmung aufweisen. Diese Ebene muss auch nicht unbedingt einer Plattform- oder Förderbandebene entsprechen. Vielmehr kann die Aufnahmeebene beispielsweise auch eine Schüttkegelseite des Baumaterials sein.

Es wird nun also auf die Partikelmaterialschüttung in einer Ebene parallel zur Förderrichtung ebenso Partikelmaterial aufgebracht, damit diese Ebene glatt und dicht wird. Dann wird darauf eine Art Deckel gesetzt, damit so ein Abdichten gegenüber der Atmosphäre erreicht wird, wenn durch diesen Deckel, Seitenwände der Partikelmaterialschüttung und dem Förderband ein Eintrittstunnel in den Bauraum bzw. Prozessraum gebildet wird.

Förderband soll hierbei nicht einschränkend zu verstehen sein, sondern jegliche Vorrichtung umfassen, die dazu geeignet ist das Baumaterial aufzunehmen und kontinuierlich fortzubewegen.

Vorzugsweise ist die Vorrichtung dadurch gekennzeichnet, dass der weitere Beschichter einen in etwa der Baufeldbreite entsprechenden Vorlagebehälter für Baumaterial umfasst, der entlang der Unterseite eine derartige Öffnung aufweist, dass Baumaterial auf die Schüttung fließen kann und der Baumaterialfluss selbstständig stoppt wenn sich zwischen dem Schlitz des Schüttungsbeschichters und der Oberseite der Schüttung ein materialspezifischen Schüttkegel gebildet wurde.

Dies hat sich als ein schneller und einfach zu verwirklichenden Beschichtungsprozess erwiesen.

Weiterhin kann die oben beschriebene Vorrichtung dadurch gekennzeichnet sein, dass das Förderband ein bewegtes Gliederband ist und insbesondere zur Positionierung der Schüttung aus Baumaterial ein geschlossenes Band aus dehnbaren Material ist und das Band am Umfang von vielen, quer zur Vorschubrichtung ausgerichteten Gliederpaaren von innen und außen geklemmt wird, wobei die oberen Glieder so angepasst und angeordnet sind, dass sie in ebener Ausrichtung des Gliederbands eine glatte geschlossene Oberfläche ergeben und die unteren Glieder so geformt sind, dass eine Umlenkung des Gliederbands mit geringer Dehnung des flexiblen Bandes möglich z.B. über eine Umlenkrolle möglich ist.

In einem weiteren Aspekt ist die wie oben beschriebene Vorrichtung dadurch gekennzeichnet, dass das Baumaterial so aufgetragen wird, dass die erste Auftragsebene eine zur horizontalen Förderrichtung schiefe Ebene ist.

Eine solche Vorrichtung hat sich als vorteilhaft für ein kontinuierliches Verfahren erwiesen.

Weiterhin kann die Vorrichtung dadurch gekennzeichnet sein, dass die erste Auftragsebene eine gerade oder eine konvex und/oder konkav gebogene Ebene ist. Die Auftragsebene kann dabei in einem Winkel zur Horizontalen geneigt sein. Ein derartiges Verfahren und eine entsprechende Vorrichtung hinsichtlich einer geraden Auftragsebene in einem Winkel zur Horizontalen ist aus dem Stand der Technik bekannt und beispielsweise beschrieben in WO2011127897A2 und WO2014079404A1.

Im weiteren betrifft die Erfindung ein Verfahren zum Herstellen von dreidimensionalen Bauteilen, bei dem mittels eines Baufeldbeschichters in einem Prozessraum formloses Baumaterial, wie z.B. Partikelmaterial oder streichfeste Pasten, schichtweise in einer ersten Auftragsebene auf eine Baumaterialschüttung aufgetragen wird und das Baumaterial über eine Verfestigungseinrichtung im Prozessraum selektiv verfestigt wird, wobei die zu bewegende Schüttung auf einer weiteren Auftragsseite durch zusätzlichen Baumaterialauftrag mit einem Schüttungsbeschichter bis zu einer Unterkannte eines Deckels aufgefüllt und geglättet wird, und der Deckel mit Seitenwänden und einem Förderband einen dichten Eintrittstunnel in ein Gehäuse bildet, so dass das Gehäuse und die sich bewegende Schüttung den Prozessraum gegenüber der Umgebung im wesentlichen abdichtet, während die Schüttung diesen Tunnel durchläuft.

In einem weiteren Aspekt kann das Baumaterial so aufgetragen werden, dass die Schüttung im Bereich des Baumaterialauftrags in der ersten Auftragsebene ein gerades Baufeld oder ein konvex und/oder konkav gebogenes Baufeld mit mindestens einem Radius darstellt.

Vorzugsweise ist das Baumaterial so aufgetragen werden, dass die erste Auftragsebene eine zur horizontalen Förderrichtung schiefe Ebene ist.

In einem weiteren Aspekt kann die Schüttung auf einem Gliederband in Schichtrichtung positioniert werden, und eine kombinierte Klemm- und Positioniervorrichtung wenigstens ein Positionierelement und wenigstens ein Klemmelement umfasst, wobei zum Positionieren des Gliederbands das Klemmelement mehrere Gliederpaare außerhalb der Seitenwände zur Begrenzung der Schüttung greift und anschließend vom Positionierelement positioniert wird und das Klemmelement auch ohne Eingriff in das Gliederband bewegt werden kann.

Ein weiterer Aspekt ist die Verwendung der oben beschriebenen Vorrichtung bei einem kontinuierlichen Aufbauverfahren.

Der Erfindung liegt als eine weitere Aufgabe zugrunde, das Verfahren und die Vorrichtung der eingangs erwähnten Art derart weiter zu bilden, dass der Antrieb der die schichtgenerierenden Werkzeuge bewegt vereinfacht wird, der Bereich der Produktionsanlage, in dem die Schüttung diese verlässt, abgedichtet ist und die Vorschubeinrichtung für die Schüttung aus Baumaterial samt Bauteil wesentlich vereinfacht und in der Funktion deutlich verbessert wird.

### Weitere Aspekte der Erfindung

Im Stand der Technik werden auf einer horizontal bewegten Schüttung aus Baumaterial, wie z.B. Partikelmaterial oder streichfähige Pasten einzelne Schichten aus Baumaterial in einem Winkel aufgetragen, der kleiner als der spezifische Schüttwinkel des Baumaterials ist.

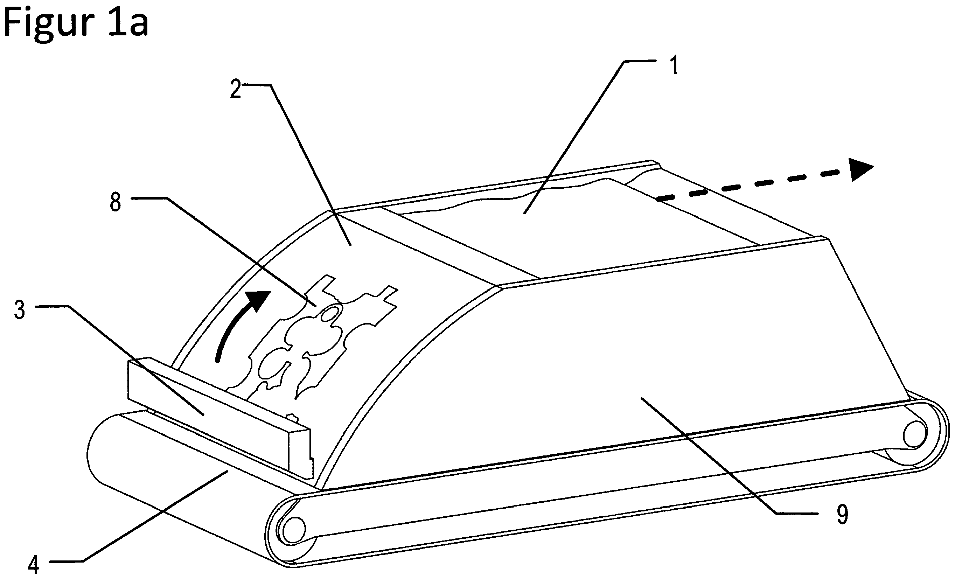

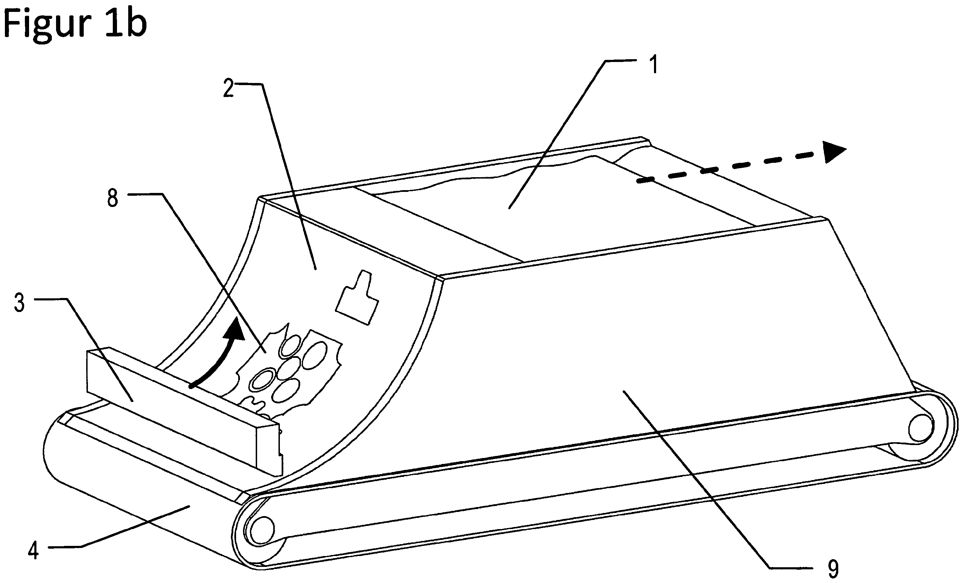

Demgegenüber sollen die Schichten aus Baumaterial, wie etwa Partikelmaterial oder streichfesten Pasten in der im Folgenden beschriebenen Erfindung in einem Bogen bzw. in einer Krümmung aufgetragen werden, der sich z.B. nach bionischen Gestaltungsgesetzen bildet (Fig.1a und b) und mindestens aus einem Radius besteht. Das Baufeld (2) ist damit gebogen bzw. gekrümmt.

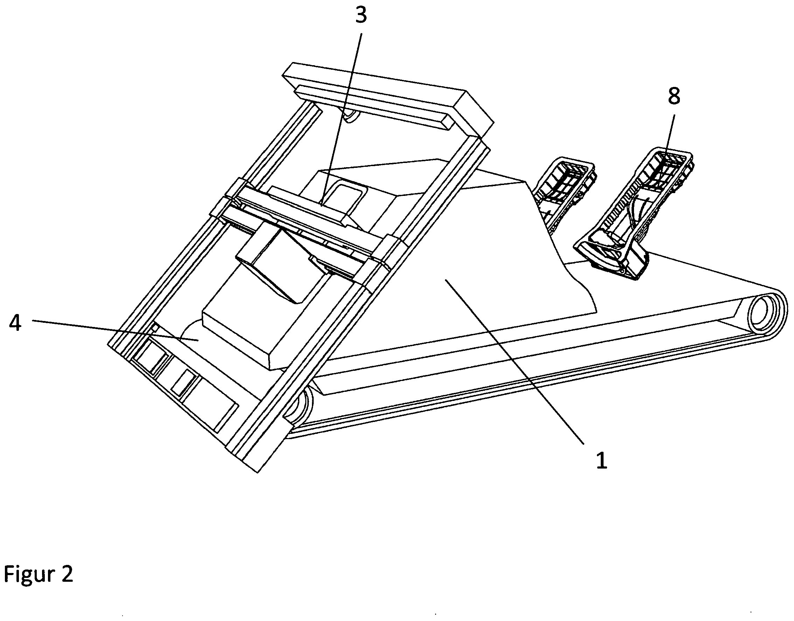

Der Bogen bzw. die Krümmung kann dabei sowohl konkav (Fig.2). als auch konvex (Fig.1). ausgeführt sein. Wird das Baumaterial in einer bionisch Bogenform bzw. Krümmung aufgetragen kann unter Umständen die Schüttung (1) stabilisiert und die Bauhöhe der Schüttung (1) im Vergleich zum Schichtauftrag in einem bestimmten Winkel vergrößert werden. Damit könnte eine Produktionsanlage mit gebogenem bzw. gekrümmtem Baufeld im Vergleich zu einer Produktionsanlage mit einfachem Schüttungswinkel bei gleicher Bauhöhe kürzer aufgebaut werden.

Ein weiterer Vorteil des bogenförmigen bzw. gekrümmten Materialauftrags ist eine Vereinfachung der Antriebsvorrichtung des Baufeldbeschichters (3).

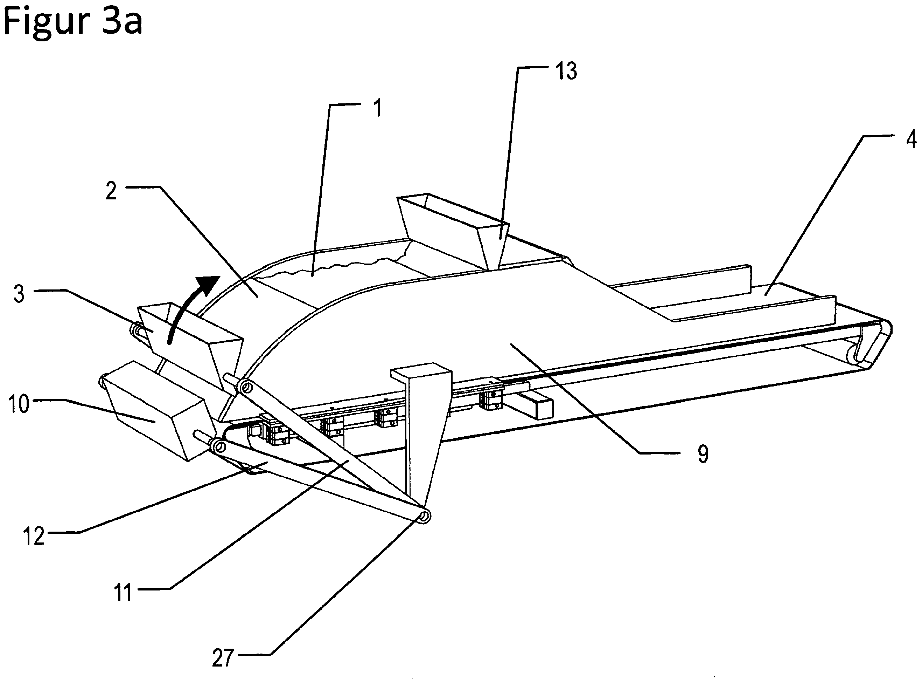

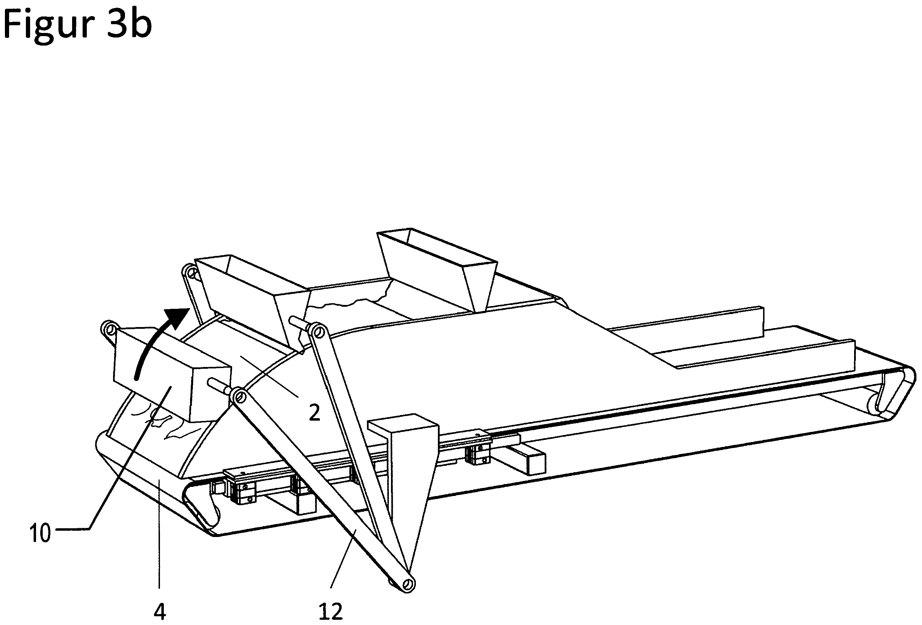

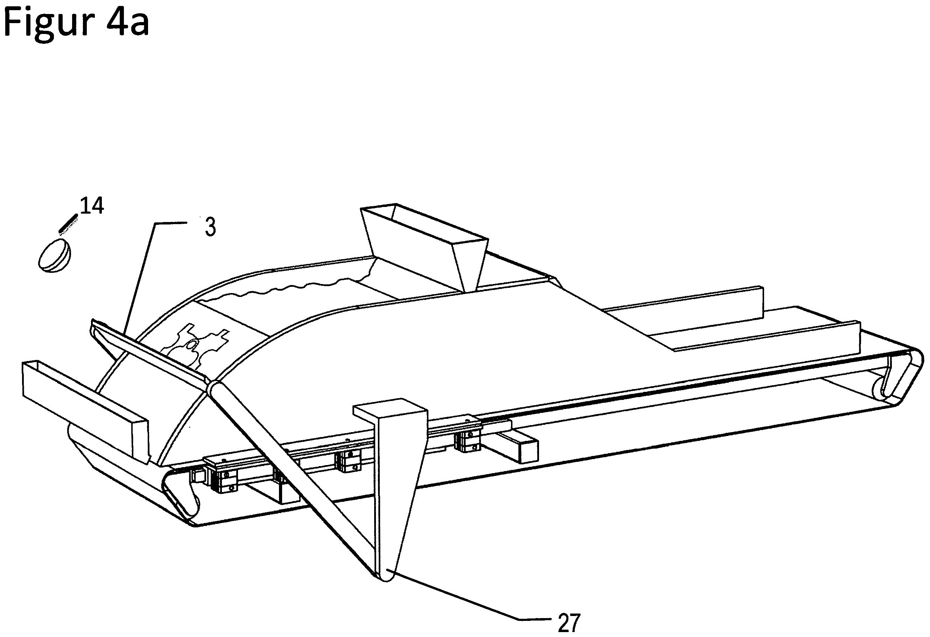

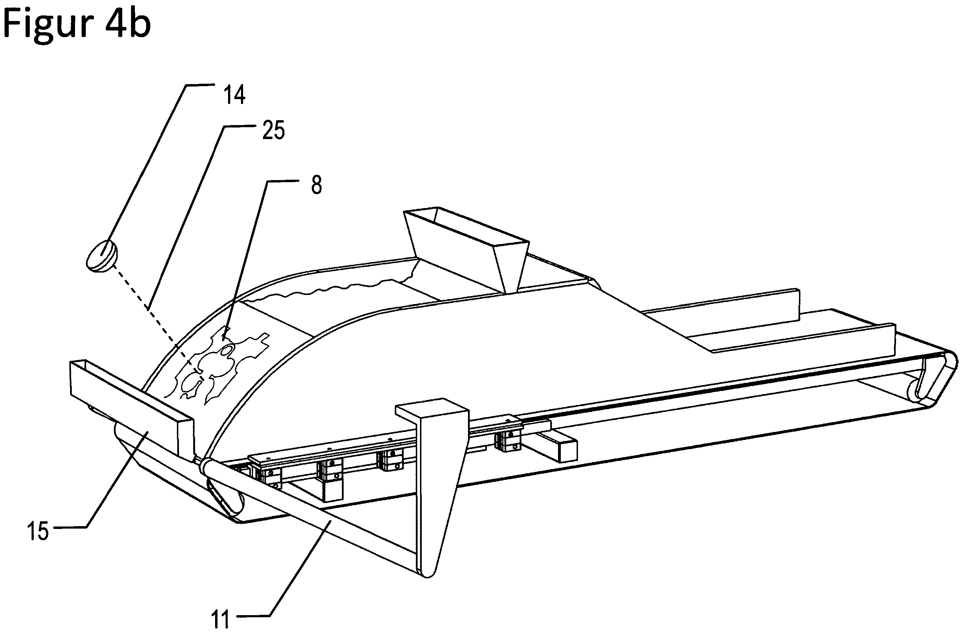

Aufgabe des Baufeldbeschichters (3) ist das Auftragen einer dünnen Schicht aus Baumaterial wie z.B. Partikelmaterial oder streichfesten Pasten. Dazu kann der Baufeldbeschichter (3), wie z.B. in Figur 3a/3b dargestellt, als baufeldbreiter Behälter ausgeführt sein, der entlang seiner Unterseite eine schmale Öffnung besitzt, aus der das Baumaterial auf das Baufeld (2) fließt. In anderen Verfahren, wie z.B. in Figur 4a/4b dargestellt, verteilt der Baufeldbeschichter (3) in Form einer Klinge eine vorgelegte Baumaterialmenge über dem Baufeld (2). Zum Schichtauftrag werden beide Arten Baufeldbeschichter (3) in einem, der Schichtdicke entsprechenden Abstand, parallel über das Baufeld bewegt.

Die Positioniervorrichtung der Baufeldbeschichter (3) ist in den meisten Produktionsanlagen nach Stand der Technik ein Linearantrieb, der in der Regel auf Baufeldhöhe angeordnet wird. Durch deren Anordnung sind die Linearantriebe starker Verschmutzung ausgesetzt und müssen aufwendig abgedichtet werden. Bei breiten Baufeldern müssen zwei parallele Linearantriebe eingesetzt werden. Beide Linearantriebe müssen dabei aufwendig mechanisch oder elektronisch gekoppelt werden. Dies führt zu hohen Anlagenkosten.

Bei der bevorzugten Ausführung der hier vorliegenden Erfindung wird der Baufeldbeschichter (3) mit Hebelarmen um ein Lager geschwenkt, dessen Drehpunkt (27) sich im Bereich des Kreismittelpunkts des Baufeldradius befindet. Damit liegt der Drehpunkt (27) und der Antrieb außerhalb des verschmutzen Bereichs und kann wesentlich einfacher und kostengünstiger aufgebaut werden. Besteht der Bogen bzw. die Krümmung aus mehreren Radien oder liegt der Drehpunkt (27) nicht nahe genug dem Mittelpunkt des Baufeldradius kann sich die Armlänge dem entsprechenden Bogen- bzw. Krümmungsverlauf anpassen.

Bei breiten Baufeldern greifen zwei Hebelarme den Baufeldbeschichter (3). Die Hebelarme können dann einfach über eine gemeinsame Welle gekoppelt werden.

Beim 3D-Druckverfahren trägt eine Art Tintenstrahldruckkopf (10) gezielt feinste Tröpfchen eines flüssigen Bindemittels auf das Baufeld auf. In Produktionsanlagen nach Stand der Technik wird auch dieser Tintenstrahldruckkopf (10) entlang eines linearen Achssystems über das Baufeld bewegt.

Wird das Baufeld in Bogenform bzw. mit einer Krümmung aufgebaut, kann der Druckkopf so wie der Baufeldbeschichter (3) mit Hebelarmen, deren Drehpunkt (27) im Bereich des Mittelpunkts des Baufeldradius liegt, über das Baufeld geschwenkt werden.

Ein weiterer Vorteil des gekrümmten bzw. bogenförmigen Baufelds liegt bei der Anwendung in Strahlschmelzverfahren, bei denen das Material mit energiereicher Strahlung wie z.B. Laserstrahlung (14) selektiv verfestigt wird. Hier kann die Optik der Laserstrahlung entsprechend der Baufeldkrümmung angepasst werden.

Ein weiterer Nachteil der Produktionsanlagen aus WO 2011 127 897 A2 und WO 2014 079 404 A1 besteht darin, dass der Bereich der Rückseite, an dem die Schüttung (1) die Produktionsanlage verlässt weitgehend offenen ist. Bestimmte Verfahren wie z.B. das Strahlschmelzverfahren benötigen einen, gegenüber der Umgebung abgedichteten Prozessraum (26), in dem die Schichten generiert und selektiv verfestigt werden.

Die Schwierigkeit eine dichte Produktionsanlage aufzubauen liegt in der verfahrensbedingten, ungleichförmigen Oberseite der Schüttung (1) und dem nur schwer abzudichtenden Förderband. Durch den Beschichtungsvorgang des Baufelds (2) und verschiedenen anderen Nebenprozessen ist die Oberseite Schüttung (1) aus Baumaterial immer uneben, so dass der Prozessraum (26) in diesem Bereich nie vollkommen abgedichtet werden kann. Ein Glattstreifen der Schüttungsoberseite ist nicht möglich, da sonst Material auf das Baufeld (2) geschoben und dieses zerstört werden würde.

In einer bevorzugten Ausführung der Erfindung glättet ein Schüttungsbeschichter (13) alle Unebenheiten auf der Oberseite der Schüttung (1), in dem er die Unebenheiten mit Baumaterial bis zur Unterkante einer Tunneldecke (24) auffüllt. Der Schüttungsbeschichter (13) ist vorzugsweise in Form eines, im Wesentlichen baufeldbreiten Behälters aufgebaut, der entlang der Unterseite so geschlitzt ist, dass Baumaterial auf die Schüttung fließen kann. Der Schüttungsbeschichter (13), wird oberhalb der Schüttung (1) in einem bestimmten Abstand zur Schüttung (1) z.B. 5mm über dem höchstmöglichsten Berg angebracht. Der Schüttungsbeschichter (13) wird ständig mit Baumaterial versorgt und füllt jede Unebenheit auf der Schüttung (1) auf. Ist eine Unebenheit aufgefüllt stoppt der Partikelmaterialfluss automatisch, wenn sich der spezifische Schüttkegel des Baumaterials gebildet hat und damit den Abwurfschlitz an der Unterseite des Baufeldbeschichters (13) abdeckt.

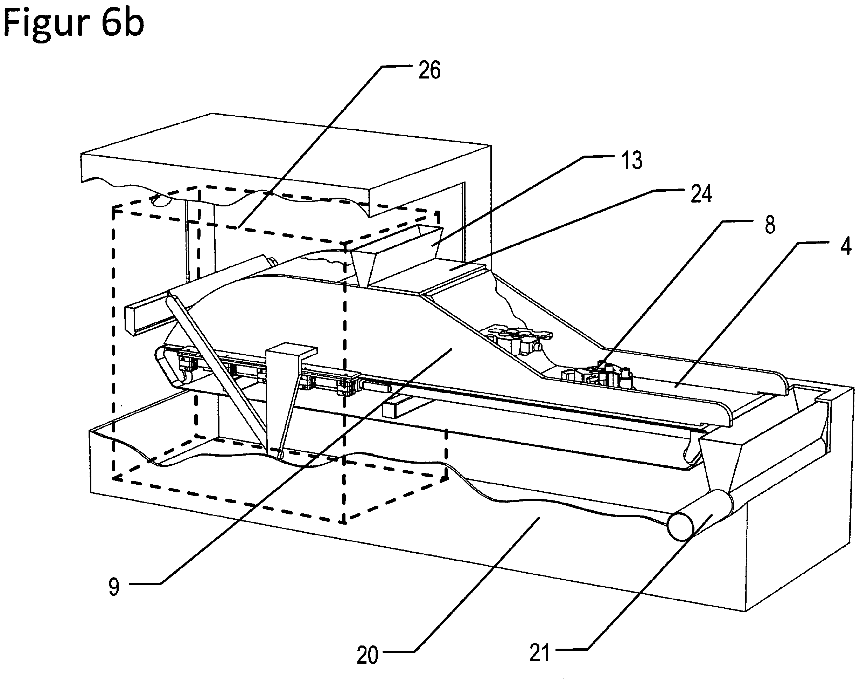

An der Unterkante des Schüttungsbeschichters (13) schließt sich in Schichtrichtung bündig die Tunneldecke (24) an. Die Tunneldecke (24) bildet mit Förderband (4) und Seitenwänden (9) zur seitlichen Begrenzung der Schüttung (1) einen dichten Tunnel für die Schüttung (1), bis die Schüttung (1) den Tunnel verlässt. Bei der Produktionsanlage schließt sich das vorzugsweise hermetisch dichte Gehäuse (20) dicht an den Tunnel an (Siehe z.B. Figur 6b) an.

Wenn die Schüttung (1) den Tunnel an der Rückseite der Produktionsanlage verlässt oder wenn fertiggestellte Bauteile (8) an der Rückseite der Produktionsanlage entnommen werden, kann die Schüttung (1) teilweise zusammenbrechen und eine Verbindung von Umgebung zum Prozessraum (26) öffnen. Um dies zu verhindern muss der Tunnel mindestens so lange wie das längste Bauteil (8) und der waagrechten Seitenlänge des materialspezifischen Schüttwinkels sein. Es kann sinnvoll sein, mit Sensoren oder Software die Lage von Bauteilen (8) in der Schüttung (1) bzw. im Tunnel zu erfassen, so dass ein Entnehmen von Bauteilen (8) zum falschen Zeitpunkt verhindert wird.

Eine weitere Maßnahme zur Abdichtung des Prozessraums (26) ist der Aufbau der Vorrichtung zum Schichtvorschub und die Möglichkeit seiner Abdichtung gegenüber der Verkleidung (20) der Produktionsanlage. In einer bevorzugten Ausführung der Erfindung wird die Schüttung (1) auf einem Gliederband (4) transportiert, bei dem eigensteife Glieder (16/19) vorzugsweise aus Metall, eine geschlossenes Band (18) aus elastischem und dichtem Material wie z.B. Gummi von oben und von unten z.B. mit Schrauben (17) segmentweise klemmen. Das dehnbare Bandmaterial ermöglicht ein Abknicken des Gliederbands (4) beim Umlenken z.B. um eine Umlenkrolle (23). Gleichzeitig ist das Gliederband (4) in waagrechter Transportstellung dicht, da das Gummiband die oberen Glieder bündig zusammenzieht. Sollte Partikelmaterial zwischen die Glieder geraten kann das dehnbare Material dies Ausgleichen.

In der bevorzugten Ausführung der Erfindung verlässt das Gliederband (4) mit oben bündig ausgerichteten Gliedern so den Prozessraum (26), dass es von oben mit schleifenden Dichtungen zum Gehäuse hin abgedichtet ist. Am Ende des Förderbands kann ein Sammeltrichter (21) angebracht werden, der gebundenes Partikelmaterial gezielt abführt.

Mit den oben aufgeführten Maßnahmen ist der Prozessraum (26), in dem die Schichten aus Baumaterial generiert und selektiv verfestigt werden, gegenüber der Umgebung im Wesentlichen dicht. Damit ermöglicht eine Produktionsanlage, die nach dieser bevorzugten Ausführung der Erfindung aufgebaut ist, die Verwendung von Schutzgasen im Herstellungsprozess.

Um das dehnbare Gliederband (4) in der Produktionsanlage zu bewegen klemmt eine kombinierte Klemm- und Positioniervorrichtung (22) seitlich und außerhalb der Wände zur seitlichen Schüttungsbegrenzung (9) mehrere Glieder (16/19) des Gliederbands (4) von oben und von unten und positioniert diese in Vorschubrichtung. Das Band (4) wird dabei senkrecht zur Vorschubrichtung nicht bewegt. Die Positionierung der kombinierten Klemm- und Positioniervorrichtung (22) erfolgt mit einem Linearantrieb z.B. einer Zahnstange, einem Gewindetrieb oder einem Zahnriemen. Hat die kombinierte Klemm- und Positioniervorrichtung (22) Ihre Endlage erreicht, lässt sie die Glieder (16/19) des Gliederbands (4) los und fährt entgegen der Vorschubrichtung in die Ausgangsposition. In der Ausgangsposition greift die kombinierte Klemm- und Positioniervorrichtung (22) erneut Glieder (16/9), so dass sich der Positioniervorgang erneut wiederholen kann. Um einen optimalen Vorschub zu erreichen greift die kombinierte Klemm- und Positioniervorrichtung (22) vorzugsweise mindestens alle Glieder (16/17) im Bereich der Schüttung (1).

Der Bereich des Gliederbands (4) auf dem die Schüttung (1) aufliegt gleitet während des Transports auf Schienen aus gleitfähigem Material, die vorzugsweise in Vorschubrichtung ausgerichtet sind. Der Vorteil dieses Transportverfahrens ist, dass es gegenüber konventionellen Förderbandpositionierverfahren sehr steif und frei von Stick-Slip-Effekten ist. Gleichzeitig lässt sich das Gliederband (4) im geklemmten Bereich absolut genau positionieren. Das Dokument WO 2013 174 361 A1 schlägt ein Verfahren vor, bei dem ein Förderband abwechselnd auf zwei Gitterrosten aufliegt, die abwechselnd gegeneinander verfahren werden können (Prinzip des sogenannten "walking beam"). Der wesentlich Nachteil des Verfahrens aus WO 2013 174 361 A1 ist, dass die Verbindung zwischen dem positionierendem Gitterrost und dem Förderband ausschließlich auf Reibung basiert und damit im Wesentlichen von der Masse der Schüttung abhängig ist. Ist die Masse der Schüttung nicht groß genug um genügend Reibkraft zwischen Förderband und dem bewegten Gitterrost zu erzeugen, wird die Schüttung nicht bewegt, denn in der Praxis erzeugen unverzichtbare Dichtungen zwischen den Wänden zur seitlichen Schüttungsbegrenzung (9) und dem Gliederband (4) Kräfte, die dem Bandvorschub entgegenwirken. Damit ist das Verfahren aus WO 2013 174 361 A1 weitgehend nur für schwere Schüttungen geeignet.

Weiter ist der Aufbau aus WO 2013 174 361 A1 sehr aufwendig und erfordert sehr hohe Fertigungsgenauigkeiten und sehr exakt positionierende, vertikale Hubeinheiten.

### Zeichnungen

Ausführungsbeispiele der Erfindung sind in den Zeichnungen dargestellt. In den Zeichnungen zeigt
Figur 1a eine perspektivische Darstellung der Ausführungsform der Vorrichtung mit konvexem, bogenförmigem (gekrümmtem) Baufeld (2).
Figur 1b eine perspektivische Darstellung der Ausführungsform der Vorrichtung mit konkavem, bogenförmigem (gekrümmtem) Baufeld (2).
Figur 2 eine perspektivische Darstellung der Ausführungsform der Vorrichtung mit schrägem (geraden) Baufeld (2).
Figur 3a eine perspektivische Darstellung der Ausführungsform der Vorrichtung mit bogenförmigem (gekrümmtem) Baufeld (2) in einem 3D-Druckverfahren, in einem Verfahrensschritt in dem eine Schicht Partikelmaterial aufgetragen wird.
Figur 3b eine perspektivische Darstellung der Vorrichtung aus Figur 3a, in einem Verfahrensschritt in dem der Tintenstrahldruckkopf (10) ein Bindemittel aufträgt.
Figur 4a eine perspektivische Darstellung der Ausführungsform der Vorrichtung mit bogenförmigem (gekrümmtem) Baufeld in einem Strahlschmelzverfahren, in einem Verfahrensschritt in dem eine Schicht Partikelmaterial aufgetragen wird.
Figur 4b eine perspektivische Darstellung der Vorrichtung aus Figur 4a, in einem Verfahrensschritt, in dem der Laser (14) die Baumaterialschicht zu einem Bauteilquerschnitt verfestigt.
Figur 5 eine perspektivische Darstellung eines Teilstücks des Gliederbands (4) wie es in der bevorzugten Ausführung der Vorrichtung verwendet wird.
Figur 6a eine perspektivische Darstellung der Ausführungsform der Vorrichtung mit Gehäuse.
Figur 6b eine perspektivische Schnittdarstellung der Ausführungsform der Vorrichtung mit Gehäuse (20).
Figur 7a eine perspektivische Darstellung der Ausführungsform der Klemm- und Positioniervorrichtung (22) für das Gliederband (4), in einem Verfahrensschritt in dem die Klemmvorrichtung geöffnet ist und in die Ausgangsstellung fährt.
Figur 7b eine perspektivische Darstellung der Ausführungsform der Klemm- und Positioniervorrichtung (22) für das Gliederband (4) in einem Verfahrensschritt, in dem die Klemmvorrichtung das Gliederband klemmt und in Vorschubrichtung bewegt.
Figur 8 eine Schnittansicht einer Ausführungsform der Vorrichtung mit Gehäuse.
Figur 9 eine perspektivische Darstellung einer Ausführungsform der Vorrichtung nach Figur 8 mit Gehäuse.

### Beschreibung von Ausführungsbeispielen

Figur 1a und Figur 1b zeigen eine bevorzugte Ausführung der Erfindung, bei der das Baufeld in einer Bogenform (Krümmung) aufgebaut wird und aus mindestens einem Radius besteht. Dabei wird bei Figur 1 das Baufeld mit einem konvex gebogenen bzw. gekrümmten Baufeld (2) dargestellt. Demgegenüber wird das Baufeld (2) in Figur 2 in einer konkav gebogenen bzw. gekrümmten Form gebildet.

In Figur 2 ist ein sogenannter kontinuierlicher Schrägdrucker gezeigt. Das Baufeld wird in einem Winkel "schräg" zur Förderrichtung aufgebaut. Insbesondere bei einem derartigen Drucker hat sich der Einsatz der vorliegenden Erfindung und insbesondere den Aspekt den Bauraum durch Einsatz eines zweiten Beschichters von der Außenatmosphäre im wesentlichen abzuschließen als besonders vorteilhaft erwiesen.

Figur 3a und Figur 3b zeigen eine Ausführung der Vorrichtung für ein 3D-Druckverfahren, bei dem zur Verfestigung einer Baumaterialschicht ein flüssiger Binder mit einer Art Tintenstrahldruckkopf (10) selektiven aufgetragen wird. Deutlich erkennbar sind der Aufbau der Schwenkvorrichtung (12) für den Druckkopf (10) und der Schwenkvorrichtung (11) für den Baufeldbeschichter (3). Sowohl Druckkopf (10) als auch Baufeldbeschichter (3) werden an Hebelarmen über das Baufeld geschwenkt. Besitzt die Baufeldbiegung bzw. die Baufeldkrümmung nur einen Radius befindet sich der Drehpunkt (27) der jeweiligen Schwenkvorrichtung (11/12) im wesentlichem im Mittelpunkt des Baufeldradius. Besteht der Baufeldbiegung bzw. die Baufeldkrümmung aus mehreren Radien oder liegt der Drehpunkt (27) nicht nahe genug dem Mittelpunkt des Baufeldradius, muss sich die Hebelarmlänge dem entsprechenden Baufeldverlauf anpassen. Es ist ersichtlich, dass sich der Drehpunkt (27) der Schwenkvorrichtungen (11/12) außerhalb des Baubereichs befindet und somit gut vor Verschmutzung durch ungebundenes Baumaterial geschützt ist.

Figur 3a zeigt die Vorrichtung in einem Verfahrensschritt in dem eine Baumaterialschicht aufgetragen wird. In der dargestellten Ausführung ist der Baufeldbeschichter (3) ein an der Unterseite geschlitzter Behälter. Figur 3b zeigt die Vorrichtung in einem Verfahrensschritt in dem ein Druckkopf (10) über dem Baufeld bewegt wird und selektiv Bindemittel aufträgt. Die Schwenkvorrichtung (12) kann dabei auch eine Achse über das Baufeld bewegen an der der Druckkopf (10) senkrecht zur Schwenkrichtung verfahren wird. Nach dem Auftrag einer Baumaterialschicht kann die Vorrichtung zum Schichtvorschub (4) die Schüttung (1) um die Dicke einer Baumaterialschicht in Baurichtung verschieben.

Figur 4a und Figur 4b zeigen eine Ausführung der Vorrichtung für ein Strahlschmelzverfahren. Der Aufbau ist weitgehend identisch zu der Ausführung der Vorrichtung aus Figur 3a und 3b.

In Figur 4a zeigt die Vorrichtung in einem Verfahrensschritt in dem eine Schicht aus Partikelmaterial aufgetragen wird. Im Gegensatz zu der Vorrichtung aus Figur 4 ist der Baufeldbeschichter (3) eine Klinge, die Partikelmaterial über das Baumaterial streicht. Das Partikelmaterial wird der Klinge in dieser Ausführungsform der Vorrichtung von einer Baufeldbeschichterbefüllung (15) vorgelegt. Figur 4b zeigt die Vorrichtung aus Figur 4a in einem Verfahrensschritt bei dem ein Laserstrahl (25) das ungebundene Partikelmaterial auf dem Baufeld (2) zu einem Bauteilquerschnitt verschmilzt bzw. versintert. Es besteht die Möglichkeit, die Optik (14), die der Laserstrahl durchläuft der Baufeldform anzupassen.

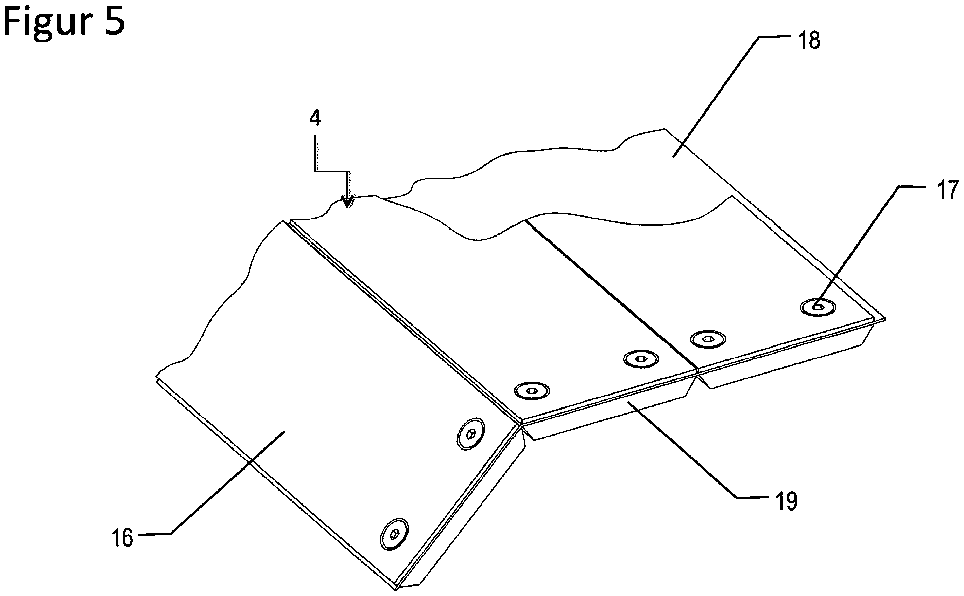

Figur 5 zeigt einen Teilabschnitt der bevorzugten Ausführung des Gliederbandes (4). In der Mitte befindet sich ein geschlossenes Band (18) aus dehnbarem und dichtem Material wie etwa Gummi. Es besteht auch die Möglichkeit dieses Band (18) als Gewebe auszuführen. Das mittlere Band (18) wird wiederholt von einem oberen Glied (16) und einem unteren Glied (19) mit z.B. Schrauben (17) geklemmt. Die unteren Glieder (19) sind mit Schrägen so ausgeführt und angeordnet, dass sich zwei dieser Glieder beim Umlenken um z.B. eine Rolle (23) nicht wesentlich berühren. Die oberen Glieder (16) sind vorzugsweise so ausgeführt und angeordnet, dass sich die Glieder an der Oberseite, wenn sie gerade ausgerichtet sind, sich im Wesentlichen berühren und eine geschlossene und glatte Oberfläche ergeben. Das dehnbare Bandmaterial zwischen den Gliedern ermöglicht es dem Gliederband sich zu dehnen und auch Einschlüsse von Partikelmaterial in den Spalten zwischen zwei Gliedern auszugleichen.

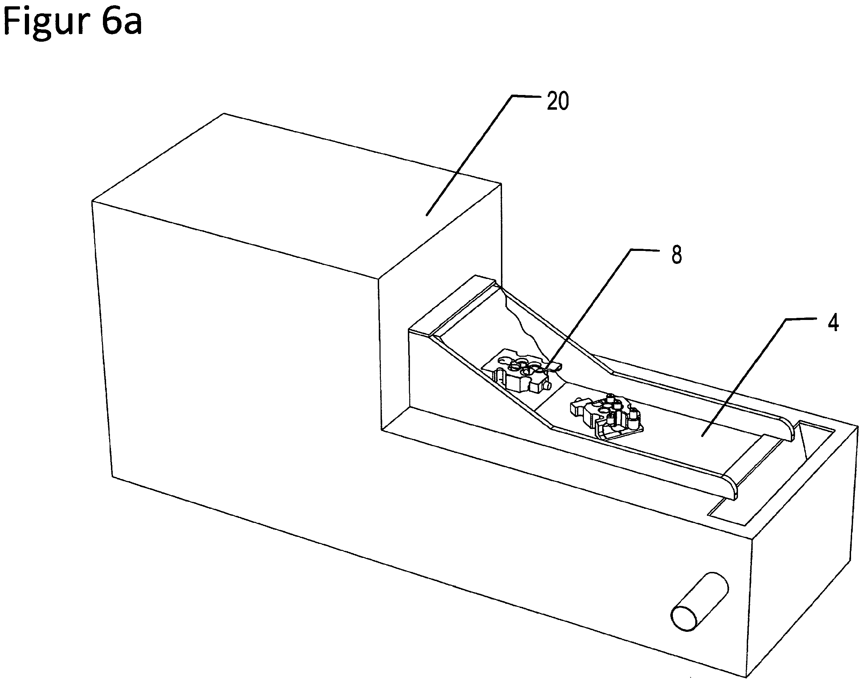

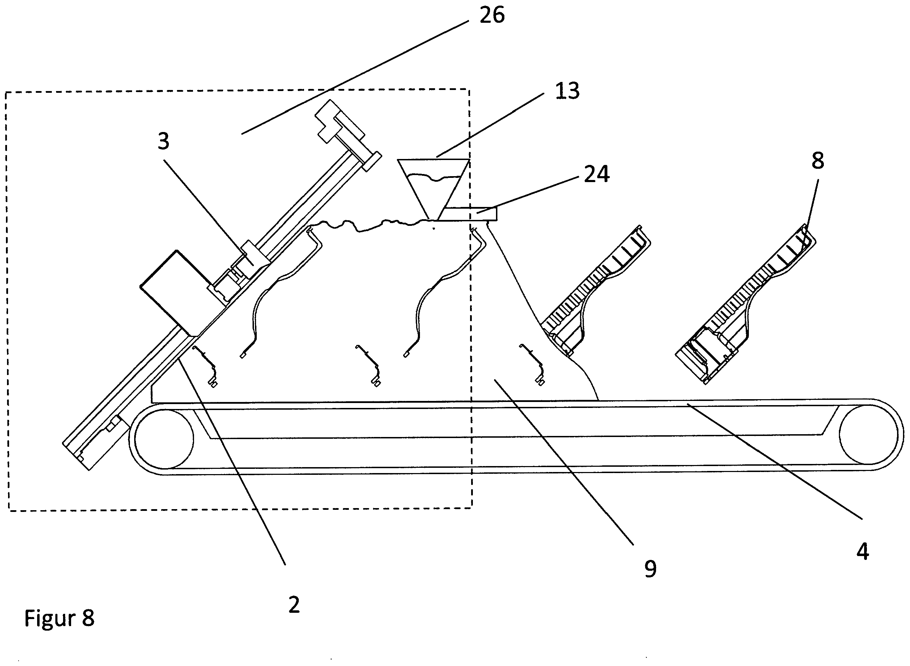

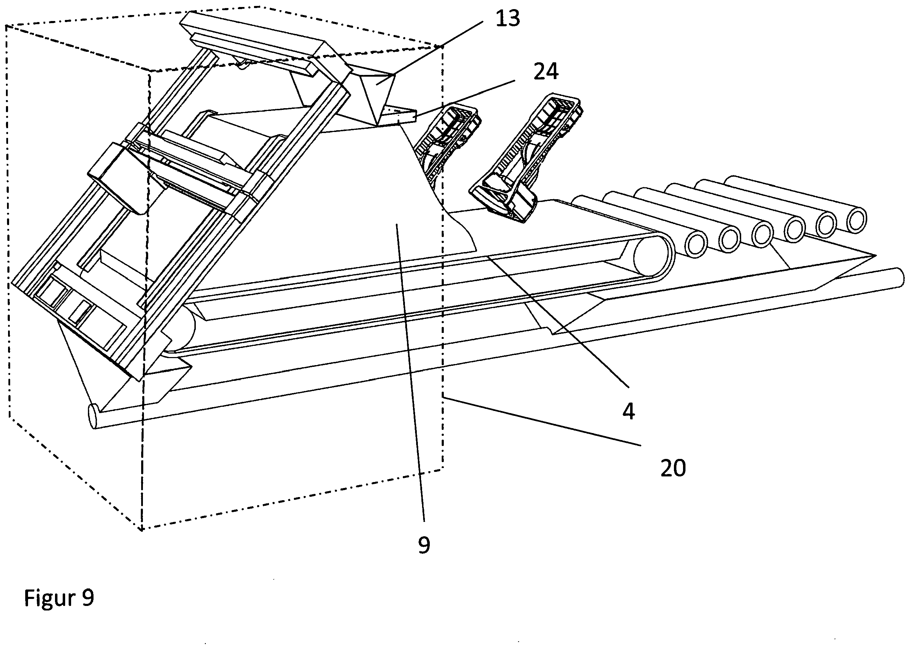

Figur 6a und 6b und Figur 8 und Figur 9 zeigen den Aufbau einer bevorzugten Ausführung der Erfindung mit dichtem Gehäuse (20)), wobein in Figur 6a und 6b jeweils ein sogenannter kontinuierlicher Bogendrucker und in Figur 8 und 9 ein sogenannter kontinuierlicher Schrägdrucker dargestellt sind. Der Bereich des Förderbandes, bzw. Gliederbands außerhalb des Gehäuses (20) ist der Bereich, in dem die fertig gestellten Bauteile entnommen werden. In diesem Bereich ist das in der in Figur 6 beispielhaft dargestellte Gliederband (4) von oben vollkommen z.B. über Gliederbandabstreifer abgedichtet. In der Schnittdarstellung aus Figur 6b sowie in Figur 9 ist deutlich zu sehen, wie der Schüttungsbeschichter (13) die Unebenheiten der Schüttung an der Oberseite durch zusätzlichen Materialauftrag ausgleicht. In Förderrichtung an der Unterkante des Schüttungsbeschichters (13) schließt sich die Tunneldecke (24) an die Beschichtung an und die Decke (24) bildet somit eine dichte Abdeckung auf dem Baumaterial. Die Tunneldecke (24) bildet mit Förderband (4) und Seitenwänden (9) einen dichten Tunnel für die Schüttung (1) bis diese den Tunnel verlässt. Bei der Produktionsanlage schließt sich das Gehäuse (20) dicht an den Tunnel an.

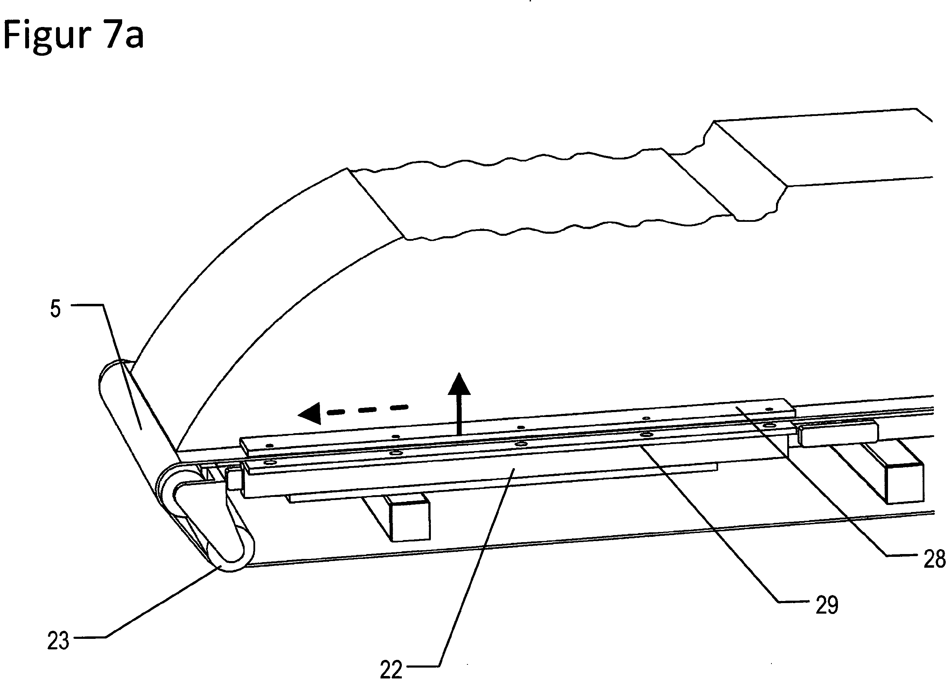

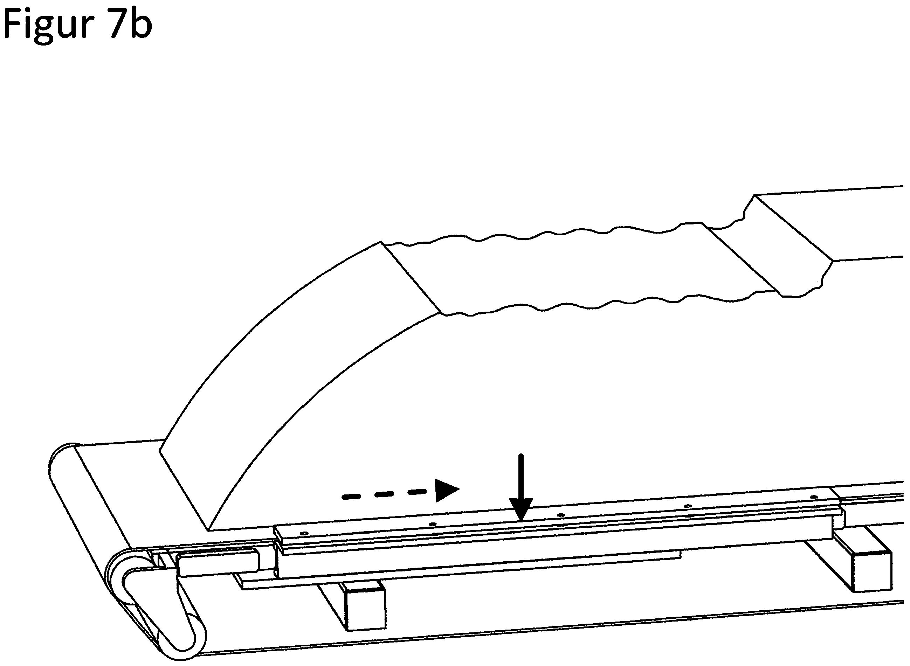

Figur 7a und 7b zeigen eine bevorzugte Ausführung Aufbau der kombinierte Klemm- und Positioniervorrichtung (22) für das Gliederband (4). Die kombinierte Klemm- und Positioniervorrichtung (22) in dieser bevorzugten Ausführung der Erfindung besteht aus wenigstens zwei Klemmplatten (28/29) die mehrere Gliederpaare (16/19) an den Außenseiten des Gliederbands (4) gleichzeitig von oben und von unten greifen (klemmen), ohne das Band anzuheben und einer Vorschubeinrichtung, die die Klemmvorrichtung in Baurichtung positioniert. Die Klemmung erfolgt vorzugsweise dadurch, dass die oberen Platten (28) mit Exzentern oder Linearzylindern nach unten gedrückt werden, und die untere Klemmplatte (29) fest mit der Positioniervorrichtung verbunden ist.

Figur 7a zeigt die kombinierte Klemm- und Positioniervorrichtung (22) auf einer Seite des Gliederbands in geöffneter Stellung. In dieser geöffneten Stellung kann die kombinierte Klemm- und Positioniervorrichtung (22) in und gegen die Vorschubrichtung (Baurichtung) bewegt werden, ohne das Gliederband (4) selbst zu bewegen. Figur 7b zeigt die kombinierte Klemm- und Positioniervorrichtung (22) aus Figur 7a in geschlossener Stellung. In dieser Stellung werden mehrere Glieder (16/19) fest gegriffen und können in Vorschubrichtung (Baurichtung) positioniert werden. Im Bereich der Schüttung (1) wird das Förderband (4) auf, in Vorschubrichtung ausgerichteten, Schienen aus gleitfähigen Material geführt. Wenn die kombinierte Klemm- und Positioniervorrichtung (22) Ihre Endlage erreicht hat, öffnet die Klemmvorrichtung wie in Figur 7a dargestellt und kann in die Ausgangsposition gebracht werden. Die kombinierte Klemm- und Positioniervorrichtung (22) kann mit Linearantrieben wie z.B. Spindelantrieben, Zahnstangenantreiben oder Zahnriemenantreiben in Vorschubrichtung hin und her werden.

## Patentansprüche

1. Vorrichtung zum Herstellen von dreidimensionalen Bauteilen, umfassend einen Baufeldbeschichter (3) in einem Prozessraum (26), wobei formloses Baumaterial, wie z.B. Partikelmaterial oder streichfeste Pasten, schichtweise in einer ersten Aufnahmeebene auf eine Baumaterialschüttung (1) auftragbar ist und ferner eine Verfestigungseinrichtung im Prozessraum (26) vorgesehen ist, um das Baumaterial selektiv zu verfestigen, wobei ein Beschichter (13) zum Auftragen von Baumaterial in einer weiteren Aufnahmeebene bis zu einer Unterkannte eines Deckels (24) vorgesehen ist, ferner ein Förderband (4) und Seitenwände (9) vorgesehen sind und der Deckel (24) mit Seitenwänden (9) und dem Förderband (4) für die Materialschüttung (1) einen dichten Eintrittstunnel in ein Gehäuse (20) bildet, so dass das Gehäuse (20) und die sich bewegende Schüttung (1) den Prozessraum (26) gegenüber der Umgebung im wesentlichen abdichtet, vorzugsweise während die Schüttung diesen Eintrittstunnel durchläuft.

2. Vorrichtung nach Anspruch 1, der weitere Beschichter (13) einen in etwa der Baufeldbreite entsprechenden Vorlagebehälter für Baumaterial umfasst, der entlang der Unterseite eine derartige Oeffnung aufweist, dass Baumaterial auf die Schüttung fließen kann und der Baumaterialfluss selbstständig stoppt wenn sich zwischen dem Schlitz des Schüttungsbeschichters (22) und der Oberseite der Schüttung (1) ein materialspezifischen Schüttkegel gebildet wurde.

3. Vorrichtung nach einem der vorhergehenden Ansprüche, wobei das Förderband ein bewegtes Gliederband (4) ist und insbesondere zur Positionierung der Schüttung aus Baumaterial (1) ein geschlossenes Band aus dehnbaren Material ist und das Band (18) am Umfang von vielen, quer zur Vorschubrichtung ausgerichteten Gliederpaaren (16/19) von innen und außen geklemmt wird, wobei die oberen Glieder (16) so angefast und angeordnet sind, dass sie in ebener Ausrichtung des Gliederbands (4) eine glatte geschlossene Oberfläche ergeben und die unteren Glieder (19) so geformt sind, dass eine Umlenkung des Gliederbands mit geringer Dehnung des flexiblen Bandes möglich z.B. über eine Umlenkrolle (23) möglich ist.

4. Vorrichtung nach einem der vorhergehenden Ansprüche, wobei das Baumaterial so aufgetragen wird, dass die erste Auftragsebene eine zur horizontalen Förderrichtung schiefe Ebene ist.

5. Vorrichtung nach einem der vorhergehenden Ansprüche, wobei die erste Auftragsebene eine gerade oder eine konvex und/oder konkav gebogene Ebene ist.

6. Verfahren zum Herstellen von dreidimensionalen Bauteilen, bei dem mittels eines Baufeldbeschichters (3) in einem Prozessraum (26) formloses Baumaterial, wie z.B. Partikelmaterial oder streichfeste Pasten, schichtweise in einer ersten Auftragsebene auf eine Baumaterialschüttung (1) aufgetragen wird und das Baumaterial über eine Verfestigungseinrichtung im Prozessraum (26) selektiv verfestigt wird, wobei die zu bewegende Schüttung (1) auf einer weiteren Auftragsseite durch zusätzlichen Baumaterialauftrag mit einem Schüttungsbeschichter (13) bis zu einer Unterkannte eines Deckels (24) aufgefüllt und geglättet wird, und der Deckel (24) mit Seitenwänden (9) und einem Förderband (4) einen dichten Eintrittstunnel in ein Gehäuse (20) bildet, so dass das Gehäuse (20) und die sich bewegende Schüttung (1) den Prozessraum (26) gegenüber der Umgebung im wesentlichen abdichtet, während die Schüttung diesen Eintrittstunnel durchläuft.

7. Verfahren nach Anspruch 6, wobei das Baumaterial so aufgetragen wird, dass die Schüttung im Bereich des Baumaterialauftrags in der ersten Auftragsebene ein konvex und/oder konkav gebogenes Baufeld mit mindestens einem Radius darstellt.

8. Verfahren nach Anspruch 6, wobei das Baumaterial so aufgetragen wird, dass die erste Auftragsebene eine zur horizontalen Förderrichtung schiefe Ebene ist.

9. Verfahren nach einem der vorhergehenden Ansprüche, wobei die Schüttung (1) auf einem Gliederband (4) in Schichtrichtung positioniert wird und eine kombinierte Klemm- und Positioniervorrichtung (22) wenigstens ein Positionierelement und wenigstens ein Klemmelement umfasst, wobei zum Positionieren des Gliederbands (4) das Klemmelement mehrere Gliederpaare (16/19) außerhalb der Seitenwände (9) zur Begrenzung der Schüttung greift und anschließend vom Positionierelement positioniert wird und das Klemmelement auch ohne Eingriff in das Gliederband bewegt werden kann.

10. Verwendung der Vorrichtung nach einem der Ansprüche 1 bis 5 bei einem kontinuierlichen Aufbauverfahren.

## Claims

1. A device for producing three-dimensional parts, said device comprising:
a construction field coater (3) in a process chamber (26), wherein a formless construction material, such as e.g. particulate material or spreadable pastes, is applicable layer by layer onto a construction material bed (1) in a first receiving plane and, further, a solidifying means is provided in the process chamber (26) in order to selectively solidify the construction material, wherein a coater (13) is provided for appyling construction material in a further receiving plane up to a lower edge of a cover (24), a conveyor belt (4) and side walls (9) are further provided and the cover (24), together with side walls (9) and the conveyor belt (4), forms a sealed entrance tunnel for the material bed (1) into a housing (20), so that the housing (20) and the moving bed (1) substantially seal the process chamber (26) with respect to the environment, preferably while the bed passes through said entrance tunnel.

2. The device according to claim 1, wherein the further coater (13) comprises a storage container for construction material, which corresponds approximately to the width of the construction field and has an opening along its lower surface such that construction material can flow onto the bed and the construction material flow stops automatically when a material-specific material cone has formed between the slot of the bed coater (22) and the upper surface of the bed (1).

3. The device according to any one of the preceding claims, wherein the conveyor belt is a moving link belt (4) and is, in particular for positioning the bed of construction material (1), a closed belt of elastic material, and the belt (18) is clamped internally and externally, at its periphery, by many pairs of links (16/19) aligned transversely to the feed direction, with the upper links (16) being chamfered and arranged such that they form a smooth continuous surface in a level alignment of the link belt (4), and the lower links (19) being formed such that deflection of the link belt is possible with little extension of the flexible belt, e.g. via a pulley (23).

4. The device according to any one of the preceding claims, wherein the construction material is applied such that the first application level is a plane inclined to the horizontal conveying direction.

5. The device according to any one of the preceding claims, wherein the first application level is a straight plane or a plane with a convex and/or concave curvature.

6. A method for producing three-dimensional parts, wherein a formless construction material, such as e.g. particulate material or spreadable pastes, is applied layer by layer in a first application level onto a construction material bed (1) by means of a construction field coater (3) in a process chamber (26), and the construction material is selectively solidified via a solidifying means in the process chamber (26),
wherein the bed (1) to be moved is filled up to a lower edge of a cover (24) on a further application side by additional application of construction material using a bed coater (13) and is then smoothed, and the cover (24), together with side walls (9) and a conveyor belt (4), forms a sealed entrance tunnel into a housing (20), so that the housing (20) and the moving bed (1) substantially seal the process chamber (26) with respect to the environment, while the bed passes through said entrance tunnel.

7. The method according to claim 6, wherein the construction material is applied such that, in the area of construction material application in the first application level, the bed represents a construction field which has a convex and/or concave curvature with at least one radius.

8. The method according to claim 6, wherein the construction material is applied such that the first application level is a plane inclined to the horizontal conveying direction.

9. The method according to any one of the preceding claims, wherein the bed (1) is positioned on a link belt (4) in a coating direction and a combined clamping and positioning device (22) comprises at least one positioning element and at least one clamping element, wherein in order to position the link belt (4), the clamping element grips several pairs of links (16/19) outside the side walls (9) in order to limit the bed and is then positioned by the positioning element, and the clamping element may also be moved without engaging with the link belt.

10. Use of the device according to any one of claims 1 to 5 in a continuous construction process.

## Revendications

1. Dispositif de fabrication de composants tridimensionnels, ledit dispositif comportant:
un enducteur de champs de construction (3) dans une chambre de procédé (26), où un matériau de construction informe, comme par ex. un matériau particulaire ou des pâtes étalables, peut être appliqué couche par couche sur un matériau de construction en vrac (1) dans un premier plan de réception et on prévoit en outre un moyen de solidification dans la chambre de procédé (26) afin de solidifier le matériau de construction de manière sélective, un enducteur (13) étant prévu pour appliquer le matériau de construction dans un plan de réception additionnel jusqu'à un bord inférieur d'un couvercle (24), une bande transporteuse (4) et des parois latérales (9) étant prévues en outre, et ledit couvercle (24) formant, ensemble avec des parois latérales (9) et la bande transporteuse (4), un tunnel d'entrée étanche pour le matériau en vrac (1) dans un boîtier (20), de sorte que le boîtier (20) et le matériau en vrac (1) mobile étanchent la chambre de procédé (26) vis-à-vis du milieu ambiant, de préférence lorsque le matériau en vrac traverse le tunnel d'entrée.

2. Dispositif selon la revendication 1, où l'enducteur additionnel (13) comporte un réservoir collecteur de matériau de construction, qui correspond environ à la largeur du champs de construction et qui présente une ouverture s'étendant le long de sa face inférieure de sorte que le matériau de construction puisse s'écouler sur le matériau en vrac et l'écoulement du matériau de construction s'arrête automatiquement lorsqu'un cône spécifique du matériau s'est formé entre la fente de l'enducteur en vrac (22) et la face supérieure du matériau en vrac (1).

3. Dispositif selon l'une quelconque des revendications précédentes, où la bande transporteuse est une bande à chaînons mobile (4) et est, notamment pour positionner le matériau de construction en vrac (1), une bande fermée en matériau extensible, et la bande (18) est serrée de l'intérieur et de l'extérieur, à sa circonférence, par beaucoup de paires de chaînons (16/19) alignées transversalement par rapport à la direction d'avance, les chaînons supérieurs (16) étant chanfreinés et disposés de manière à constituer une surface lisse continue en alignement plan de la bande à chaînons (4), et les chaînons inférieurs (19) étant formés de sorte qu'un renvoi de la bande à chaînons soit possible à faible d'extension de la bande extensible, par ex. au moyen d'une poulie (23).

4. Dispositif selon l'une quelconque des revendications précédentes, où le matériau de construction est appliqué de sorte que le premier plan d'application soit un plan incliné par rapport au sens de transport horizontal.

5. Dispositif selon l'une quelconque des revendications précédentes, où le premier plan d'application est un plan droit ou un plan convexe et/ou concave.

6. Procède de fabrication de composants tridimensionnels, dans lequel un matériau de construction informe, par ex. un matériau particulaire ou des pâtes étalables, est appliqué couche par couche dans un premier plan d'application sur un matériau de construction en vrac (1) au moyen d'un enducteur de champs de construction (3) dans une chambre de procédé (26), et le matériau de construction est sélectivement solidifié par un moyen de solidification dans la chambre de procédé (26),
le matériau en vrac (1) à déplacer étant versé jusqu'à un bord inférieur d'un couvercle (24) d'un autre côté d'application par application additionnelle de matériau de construction utilisant un enducteur en vrac (13) et est ensuite raplati, et ledit couvercle (24) formant, ensemble avec des parois latérales (9) et une bande transporteuse (4), un tunnel d'entrée étanche dans un boîtier (20), de sorte que le boîtier (20) et le matériau en vrac (1) mobile étanchent sensiblement la chambre de procédé (26) vis-à-vis du milieu ambiant, lorsque le matériau en vrac traverse le tunnel d'entrée.

7. Procédé selon la revendication 6, dans lequel le matériau de construction est appliqué de sorte que le vrac, dans la région d'application de matériau de construction au premier plan d'application, constitue un champs de construction qui présente une courbure convexe et/ou concave d'au moins un rayon.

8. Procédé selon la revendication 6, dans lequel le matériau de construction est appliqué de sorte que le premier plan d'application soit un plan incliné par rapport au sens de transport horizontal.

9. Procédé selon l'une quelconque des revendications précédentes, dans lequel le matériau en vrac (1) est positionné sur une bande à chaînons (4) dans une direction d'enduction et un dispositif combiné de serrage et de positionnement (22) comporte au moins un élément de positionnement et au moins un élément de serrage, ledit élément de serrage, afin de positionner la bande à chaînons (4), saisit plusieurs paires de chaînons (16/19) en dehors des parois latérales (9) afin de limiter le vrac et est ensuite positionné par l'élément de positionnement, l'élément de serrage pouvant être déplacé également sans venir en prise dans la bande à chaînons.

10. Utilisation du dispositif selon l'une quelconque des revendications 1 et 5 dans un procédé de construction continu.
